(19) Europäisches Patentamt / European Patent Office / Office européen des brevets

(11) EP 3 034 558 B1

(12) **EUROPEAN PATENT SPECIFICATION**

(45) Date of publication and mention of the grant of the patent:
**19.07.2017 Bulletin 2017/29**

(21) Application number: **15200507.0**

(22) Date of filing: **16.12.2015**

(51) Int Cl.:
*C08L 77/00* (2006.01) *C08K 5/092* (2006.01)
*C08K 5/17* (2006.01) *C08K 7/14* (2006.01)
*C08L 77/06* (2006.01)

# (54) THERMOPLASTIC RESIN COMPOSITION AND MOLDED PART FOR AUTOMOBILES USING THE SAME

THERMOPLASTISCHE HARZZUSAMMENSETZUNG UND GEFORMTES TEIL FÜR KRAFTFAHRZEUGE DAMIT

COMPOSITION DE RÉSINE THERMOPLASTIQUE ET PIÈCE MOULÉE D'AUTOMOBILE UTILISANT CELLE-CI

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.12.2014 KR 20140184354**

(43) Date of publication of application:
**22.06.2016 Bulletin 2016/25**

(73) Proprietor: **Lotte Advanced Materials Co., Ltd.**
**Yeosu-si**
**Jeollanam-do (KR)**

(72) Inventors:
- **KANG, Hyoung Taek**
  **Uiwang-si, Gyeonggi-do (KR)**
- **CHUNG, Jae Youp**
  **Uiwang-si, Gyeonggi-do (KR)**
- **HONG, Chang Min**
  **Uiwang-si, Gyeonggi-do (KR)**

(74) Representative: **Michalski Hüttermann & Partner Patentanwälte mbB**
**Speditionstraße 21**
**40221 Düsseldorf (DE)**

(56) References cited:
**US-A1- 2012 196 962**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 034 558 B1

## Description

This application claims the benefit of Korean Patent Application No. 10-2014-00184354, filed December 19, 2014 and No. 10-2015-0156103, filed November 06, 2015 in the Korean Intellectual Property Office, the entire disclosure of which is incorporated herein by reference.

The present invention relates to a thermoplastic resin composition for automobiles, and more specifically, to a polyamide resin composition for automobiles parts having good long-term thermal stability.

Polyamide resins have good properties in terms of thermal resistance, wear resistance, chemical resistance and flame retardancy, and are thus used for a wide range of applications, such as electrical components, electronic components, automobile components, and the like.

Specifically, with the trend of realizing excellent fuel efficiency, engine downsizing is in progress, therefore automobiles having turbocharger are increasing. The automobiles having turbocharger demand that the turbocharger parts are formed of material having higher heat resistance. Because of that the turbochargers are usually exposed to the high temperature from engine output.

For example, under-the-hood area, parts of an under hood, are generally formed of polyamide resin compositions having good heat resistance, since the peripheral parts are exposed to high-temperature environments for a long time.

Generally, organic antioxidants such as phenol or phosphite antioxidants are broadly used to secure long-term thermal stability of polyamide resin compositions. However, the organic antioxidants have a limit in maintaining good physical properties of the polyamide resin compositions at high temperature for a long period of time.

In addition, a copper halide heat stabilizer, such as a CuI/KI mixture, known to exhibit good long-term thermal stability at high temperature as compared with organic antioxidants is used. However, copper can discolor or precipitate over time, thereby causing a problem in use for electrical, electronic, and automobile components.

Therefore, there is a need for polyamide resin compositions capable of maintaining high thermal stability despite exposure to high temperature for a long time in order to be used for peripheral parts of an automobile engine compartment.

The present invention has been conceived to solve such problems in the related art and it is an aspect of the present invention to provide a thermoplastic resin composition for automobiles having good long-term thermal stability and processability to maintain mechanical strength for a long time.

One aspect of the present invention, is a thermoplastic resin composition for automobiles including: a semi-aromatic polyamide resin; an aliphatic polyamide resin; a first chelating agent containing an amino group and at least one of carboxylic acid and salts thereof; a second chelating agent containing a C1 to C10 (not including carbon of carboxyl group) aliphatic polyhydric carboxylic acid having two to four carboxyl groups; and fillers.

The thermoplastic resin composition may includes 30 wt% to 70 wt% of the semi-aromatic polyamide resin; 1 wt% to 20 wt% of the aliphatic polyamide resin; 0.1 wt% to 1 wt% of the first chelating agent; 0.1 wt% to 5 wt% of the second chelating agent; and 10 wt% to 60 wt% of the fillers.

The semi-aromatic polyamide resin and the aliphatic polymer resin may present in a weight ratio of 1:0.05 to 1:0.5.

The first chelating agent and the second chelating agent may present in a weight ratio of 1:0.5 to 1:10.

The fillers may include glass fibers.

The semi-aromatic polyamide resin may include a repeat unit which includes a dicarboxylic acid unit containing 10 mol% to 100 mol% of an aromatic dicarboxylic acid; and an aliphatic diamine or alicyclic diamine unit.

The semi-aromatic polyamide resin may includes at least one of polyamide (PA6T/66) consisting of hexamethylene terephthalamide and hexamethylene adipamide, and polyamide (PA6T/DT) consisting of hexamethylene terephthalamide and 2-methylpentamethylene terephthalamide.

The semi-aromatic polyamide resin may have a glass transition temperature (Tg) of 80°C to 150°C.

The aliphatic polyamide resin may include at least one of polyamide 6(poly(hexano-6-lactam)) and polyamide 66(Poly[imino(1,6-dioxohexamethylene) iminohexamethylene]).

The aliphatic polyamide resin may have a glass transition temperature (Tg) of 30°C to 80°C.

The first chelating agent may include at least one selected from the group consisting of ethylenediamine-N,N,N',N'-tetraacetic acid (EDTA), ethylene glycol bis(2-aminoethylether)-N,N,N',N'-tetraacetic acid (EGTA), trans-1,2-diaminocyclohexane-N,N,N',N'-tetraacetic acid (CyDTA), diethylene triamine pentaacetic acid (DTPA), triethylenetetramine-N,N,N',N'',N''',N'''-hexaacetic acid (TETHA), N-(2-hydroxyethyl)ethylenediamine triacetic acid (HEDTA), and metal salts thereof.

The first chelating agent may include at least one metal ion selected from sodium (Na), aluminum (Al), iron (Fe), copper (Cu), zinc (Zn), tin (Sn), titanium (Ti), nickel (Ni), antimony (Sb), magnesium (Mg), vanadium (V), chromium (Cr), and zirconium (Zr) ions.

The second chelating agent includes at least one selected from the group consisting of fumaric acid, succinic acid, 3,3-diethylsuccnic acid, malonic acid, dimethylmalonic acid, tartaric acid, maleic acid, citric acid, malic acid, adipic acid, 2-methyladipic acid, trimethyladipic acid, itaconic acid, glutaric acid, 2,2-dimethylglutaric acid, pimelic acid, azelaic acid, dimer acid, sebacic acid, suberic acid, decanedicarboxylic acid, dodecane dicarboxylic acid, citraconic acid, tetrahydrophthalic acid, 1,2,3,4-butanetetracarboxylic acid, oxalic acid, and a combination thereof.

Another aspect of the present invention is a molded part for automobiles manufactured from the thermoplastic resin composition for automobiles.

The molded part may have an initial tensile strength $a_0$ after being left at 23°C and 50% relative humidity (RH) for 48 hours measured in accordance with ASTM D638 and a tensile strength $a_1$ after being left at 220°C for 500 hours also measured in accordance with ASTM D638, wherein the molded part can have a tensile strength retention ratio range of $a_1$ and $a_0$ represented by the following Equation 1:

[Equation 1]

$$85 \leq \frac{a_1}{a_0} \times 100 \leq 100 .$$

The molded part may have an initial tensile strength $a_0$ after being left at 23°C and 50% relative humidity (RH) for 48 hours measured in accordance with ASTM D638 and a tensile strength $a_2$ after being left at 220°C for 1,000 hours also measured in accordance with ASTM D638, wherein the molded part can have a tensile strength retention ratio range of $a_2$ and $a_0$ represented by the following Equation 2:

[Equation 2]

$$70 \leq \frac{a_2}{a_0} \times 100 \leq 100 .$$

The molded part may have a gas generation amount represented by the following Equation 3, as measured by weighing 5 g of the molded part in a Petri dish, covering the dish with a dish cap, placing the dish on a hot plate at 330°C for 2 hours, followed by measuring the amount of volatile substances adsorbed to the dish cap.

[Equation 3]

$$50 \leq \frac{C - C_0}{S} \times 10^6 \leq 900 ,$$

wherein C is a weight of the dish cap after evaluation, $C_0$ is a weight of the dish cap before evaluation, and S is a weight of the molded part used for evaluation.

The molded part may be at least one of under hood parts.

The molded part may be battery fuse terminal, turbo resonator or intercooler tank.

The thermoplastic resin composition for automobiles according to the present invention can stably maintain initial physical properties at high temperature for a long time. In addition, the thermoplastic resin composition for automobiles according to the present invention can generate a low amount of gas upon processing, thereby facilitating processing. Further, the thermoplastic resin composition for automobiles according to the present invention has good fluidity.

The present invention is not limited to the advantageous effects as set forth above, and other advantageous effects of the present invention will be clearly understood by those skilled in the art from the claims.

The aspects, features, and advantages of the present invention will become apparent from the detailed description of the following embodiments in conjunction with the accompanying drawings. It should be understood that the present invention is not limited to the following embodiments and may be embodied in different ways by those skilled in the art without departing from the scope of the present invention. Rather, the embodiments are provided for complete disclosure and to provide thorough understanding of the present invention by those skilled in the art. The scope of the present invention should be defined only by the appended claims.

Unless otherwise defined herein, all terms including technical or scientific terms used herein have the same meanings as commonly understood by those skilled in the art to which the present invention pertains. It will be further understood that terms, such as those defined in commonly used dictionaries, should not be interpreted in an idealized or overly formal sense unless expressly so defined herein.

Hereinafter, a thermoplastic resin composition for automobiles according to the present invention will be described.

A thermoplastic resin composition for automobiles according to one embodiment may include a polyamide resin, a chelating agent, and fillers, in which the polyamide resin may include a semi-aromatic polyamide resin and an aliphatic polyamide resin, and the chelating agent may include a first chelating agent and a second chelating agent.
As used herein, the terms "first chelating agent" and "second chelating agent" are used only to distinguish kinds of chelating agents and do not affect the scope of the claims.
Components of the thermoplastic resin composition for automobiles according to the embodiment of the present invention will be described in detail.

**Polyamide resin**

In the present invention, the polyamide resin includes both the semi-aromatic polyamide resin and the aliphatic polyamide resin, thereby improving not only long-term thermal stability but also fluidity and processability.

Semi-aromatic polyamide resin

The semi-aromatic polyamide resin may include a semi-aromatic polyamide resin having high heat resistance.
The semi-aromatic polyamide resin may be a homopolymer, a copolymer, a terpolymer or a polymer derived from more than three different monomers, which is formed from monomers having an aromatic group. Here, the term "copolymer" refers to a polyamide having repeat units of two or more amide and/or diamide molecules.
Specifically, the semi-aromatic polyamide resin has a structure contained an aromatic compound in a main chain. And the semi-aromatic polyamide resin may be prepared by condensation polymerization of a dicarboxylic acid monomer containing 10% by mole (mol%) to 100 mol% of an aromatic dicarboxylic acid; and an aliphatic diamine or alicyclic diamine monomer. Specifically, the aliphatic monomer or alicyclic diamine monomer may have 4 to 20 carbons. And the aromatic dicarboxylic acid monomer may be terephthalic acid or isophthalic acid which contains an aromatic benzene ring in the molecule.
That is, the semi-aromatic polyamide resin includes a repeat unit which includes a dicarboxylic acid unit; and an aliphatic diamine or alicyclic diamine unit. The dicarboxylic acid unit contains 10 mol% to 100 mol% of an aromatic dicarboxylic acid unit.
The aromatic dicarboxylic acid unit may be derived from, for example, terephthalic acid, isophthalic acid, 2,6-naphthalenedicarboxylic acid, 2,7-naphthalenedicarboxylic acid, 1,4-naphthalenedicarboxylic acid, 1,4-phenylenedioxydiacetic acid, 1,3-phenylenedioxydiacetic acid, diphenic acid, 4,4'-oxydibenzoic acid, diphenylmethane-4,4'-dicarboxylic acid, diphenylsulfone-4,4'-dicarboxylic acid, or 4,4'-biphenyldicarboxylic acid.
The dicarboxylic acid unit may further include a unit derived from a non-aromatic dicarboxylic acid in addition to the aromatic dicarboxylic acid unit. The non-aromatic dicarboxylic acid may be an aliphatic or alicyclic dicarboxylic acid. Examples of the non-aromatic dicarboxylic acid may include units derived from aliphatic dicarboxylic acids, such as malonic acid, dimethylmalonic acid, succinic acid, glutaric acid, adipic acid, 2-methyladipic acid, trimethyladipic acid, pimelic acid, 2,2-dimethylglutaric acid, 2,2-diethylsuccinic acid, azelaic acid, sebacic acid, suberic acid or the like; and alicyclic dicarboxylic acids, such as 1,3-cyclopentanedicarboxylic acid, 1,4-cyclohexanedicarboxylic acid, or the like.
These non-aromatic dicarboxylic acid units may be used alone or in combination thereof. In the dicarboxylic acid unit, the non-aromatic dicarboxylic acid may be present in an amount of 90 mol% or less, specifically 80 mol% or less, 70 mol% or less, or 60 mol% or less.
The aliphatic diamine unit may be derived from, for example, a $C_4$ to $C_{18}$ aliphatic alkylene diamine. Here, the $C_4$ to $C_{18}$ aliphatic alkylene diamine may include at least one selected from the group consisting of linear aliphatic alkylene diamines such as 1,6-hexanediamine, 1,7-heptanediamine, 1,8-octanediamine, 1,9-nonanediamine, 1,10-decanediamine, 1,11-undecanediamine, 1,12-dodecanediamine, or the like; and branched aliphatic alkylene diamines such as 1-butyl-1,2-ethanediamine, 1,1-dimethyl-1,4-butanediamine, 1-ethyl-1,4-butanediamine, 1,2-dimethyl-1,4-butanediamine, 1,3-dimethyl-1,4-butanediamine, 1,4-dimethyl-1,4-butanediamine, 2,3-dimethyl-1,4-butanediamine, 2-methyl-1,5-penthanediamine, 3-methyl-1,5-penthanediamine, 2,5-dimethyl-1,6-hexanediamine, 2,4-dimethyl-1,6-hexanediamine, 3,3-dimethyl-1,6-hexanediamine, 2,2-dimethyl-1,6-hexanediamine, 2,2,4-trimethyl-1,6-hexanediamine, 2,4,4-trimethyl-1,6-hexanediamine, 2,4-diethyl-1,6-hexanediamine, 2,2-diethyl-1,7-heptanediamine, 2,3-dimethyl-1,7-heptanediamine, 2,4-dimethyl-1,7-heptanediamine, 2,5-dimethyl-1,7-heptanediamine, 2-methyl-1,8-octanediamine, 3-methyl-1,8-octanediamine, 4-methyl-1,8-octanediamine, 1,3-dimethyl-1,8-octanediamine, 1,4-dimethyl-1,8-octanediamine, 2,4-dimethyl-1,8-octanediamine, 3,4-dimethyl-1,8-octanediamine, 4,5-dimethyl-1,8-octanediamine, 2,2-dimethyl-1,8-octanediamine, 3,3-dimethyl-1,8-octanediamine, 4,4-dimethyl-1,8-octanediamine, 5-methyl-1,9-nonanediamine, or the like.
The aliphatic diamine unit may be at least one diamine derived from, for example, 1,6-hexanediamine, 1,7-heptanediamine, 1,10-decanediamine, 1,11-undecanediamine, 1,12-dodecanediamine, 1-butyl-1,2-ethanediamine, 1,1-dimethyl-1,4-butanediamine, 1-ethyl-1,4-butanediamine, 1,2-dimethyl-1,4-butanediamine, 1,3-dimethyl-1,4-butanediamine, 1,4-dimethyl-1,4-butanediamine, 2,3-dimethyl-1,4-butanediamine, 2-methyl-1,5-penthanediamine, 3-methyl-1,5-penthanediamine, 2,5-dimethyl-1,6-hexanediamine, 2,4-dimethyl-1,6-hexanediamine, 3,3-dimethyl-1,6-hexanediamine, 2,2-dimethyl-1,6-hexanediamine, 2,2,4-trimethyl-1,6-hexanediamine, 2,4,4-trimethyl-1,6-hexanediamine, 2,4-diethyl-1,6-hexanediamine, 2,2-diethyl-1,7-heptanediamine, 2,3-dimethyl-1,7-heptanediamine, 2,4-dimethyl-1,7-heptanediamine, and 2,5-dimethyl-1,7-heptanediamine.

The semi-aromatic polyamide resin may include polyamide (PA6T/66) consisting of hexamethylene terephthalamide and hexamethylene adipamide, polyamide (PA6T/DT) consisting of hexamethylene terephthalamide and 2-methylpentamethylene terephthalamide, or combinations thereof. Specifically, PA6T/66 may be used.

The semi-aromatic polyamide resin is a resin capable of exhibiting high heat resistance, and may have a glass transition temperature (Tg) of 80°C to 150°C, specifically 85°C to 120°C.

The semi-aromatic polyamide resin is not specifically limited in terms of molecular weight and has an intrinsic viscosity (IV) of 0.75 or greater, specifically 0.75 to 1.15. The intrinsic viscosity (IV) measured at 25°C after dissolution in a 98% sulfuric acid solution.

The semi-aromatic polyamide resin may be present in an amount of 30% by weight (wt%) to 70 wt%, specifically 40 wt% to 60 wt% in the thermoplastic resin composition for automobiles.

Within these ranges, the thermoplastic resin composition can exhibit good impact strength and processability.

Aliphatic polyamide resin

The aliphatic polyamide resin is a polyamide containing no aromatic ring in the molecular chain, and may contain a $C_{10}$ to $C_{20}$ aliphatic group.

The aliphatic polyamide resin may be a homopolymer, a copolymer, a terpolymer or a polymer derived from more than three different monomers, which is formed from aminocarboxylic acid, lactam or diamine, and dicarboxylic acid. Here, the term "copolymer" refers to a polyamide having repeat units of two or more amide and/or diamide molecules.

The aminocarboxylic acid may include $C_6$ to $C_{12}$ aminocarboxylic acids, specifically 6-aminocapronic acid, 7-aminoheptanic acid, 9-aminononanic acid, 11-aminoundecanic acid, 12-aminododecanic acid, or the like.

The lactam may include $C_4$ to $C_{12}$ lactams, specifically α-pyrrolidone, ε-caprolactam, ω-laurolactam, ε-enantolactam, or the like.

The diamine may be an aliphatic diamine or alicyclic diamine. Specifically, the diamine may include tetramethylenediamine, hexamethylenediamine, 2-methylpentamethylenediamine, nonamethylenediamine, undecamethylenediamine, dodecamethylenediamine, 2,2,4-trimethylhexamethylenediamine, 2,4,4-trimethylhexamethylenediamine, 5-methylnonamethylenediamine, 1,3-bis(aminomethyl)cyclohexane, 1,4-bis(aminomethyl)cyclohexane, 1-amino-3-aminomethyl-3,5,5-trimethylcyclohexane, bis(4-aminocyclohexyl)methane, bis(3-methyl-4-aminocyclohexyl)methane, 2,2-bis(4-aminocyclohexyl)propane, bis(aminopropyl)piperazine, aminoethylpiperazine, bis(p-aminocyclohexyl)methane, 2-methyloctamethylenediamine, trimethylhexamethylenediamine, 1,8-diaminooctane, 1,9-diaminononane, 1,10-diaminodecane, 1,12-diaminododecane, m-xylylenediamine, or the like.

The dicarboxylic acid may be an aliphatic or alicyclic dicarboxylic acid. Examples of the dicarboxylic acid may include adipic acid, 2-methyladipic acid, trimethyladipic acid, glutaric acid, 2,2-dimethylglutaric acid, pimelic acid, suberic acid, azelaic acid, sebacic acid, dodecanedioic acid, 1,4-cyclohexanedicarboxylic acid, malonic acid, dimethylmalonic acid, succinic acid, 2,2-diethylsuccinic acid, and the like.

The aliphatic polyamide resin may include at least one of polyamide 6, polyamide 66, polyamide 46, polyamide 610, polyamide 612, polyamide 11, polyamide 12, polyamide 910, polyamide 912, polyamide 913, polyamide 914, polyamide 915, polyamide 616, polyamide 936, polyamide 1010, polyamide 1012, polyamide 1013, polyamide 1014, polyamide 1210, polyamide 1212, polyamide 1213, polyamide 1214, polyamide 614, polyamide 613, polyamide 615, polyamide 616and a combination thereof.

As a preferable example of the aliphatic polyamide resin, polyamide 6(poly(hexano-6-lactam)) or polyamide 66(Poly[imino(1,6-dioxohexamethylene) iminohexamethylene]) may be used. A mixture of polyamide 6 and polyamide 66 may also be used, as needed.

The aliphatic polyamide resin may have a glass transition temperature (Tg) of 30°C to 80°C, specifically 35°C to 50°C. Further, the aliphatic polyamide resin may have a melting point of 160°C to 210°C. With the aliphatic polyamide resin having the glass transition and melting point within these ranges, the thermoplastic resin composition can exhibit good impact strength and processability.

Preferably, the aliphatic polyamide resin has a number average molecular weight (Mn) of 10,000 g/mol to 200,000 g/mol, more preferably 20,000 g/mol to 150,000 g/mol, without being limited thereto.

The aliphatic polyamide resin may be present in an amount of 1 wt% to 20 wt%, specifically 3 wt% to 15 wt% in the thermoplastic resin composition for automobiles. When the content of the aliphatic polyamide resin is not within this range, the thermoplastic resin composition can exhibit poor heat resistance or mechanical strength.

In the present invention, a mixture of the semi-aromatic polyamide resin and the aliphatic polyamide resin is

used to achieve good long-term thermal stability. Here, a weight ratio of the semi-aromatic polyamide resin to the aliphatic polyamide resin may range from 1:0.05 to 1:0.5, specifically from 1:0.08 to 1:0.2. Within this range, the thermoplastic resin composition can exhibit further improved long-term thermal stability and can generate a low amount of gas upon processing to facilitate extrusion and other processing.

**Chelating agent**

The thermoplastic resin composition for automobiles may use two kinds of chelating agents including the first chelating agent and the second chelating agent.

First chelating agent

The first chelating agent may include at least one of carboxylic acid and salts thereof and an amino group.

The first chelating agent is a compound having a functional group capable of forming bonding with a metal ion in the molecular structure, and can be bonded to a cation of a metal salt, which is dissociated into the cation and an anion, thereby forming a stabilized chelate complex compound.

As the first chelating agent, compounds having a polyvalent carboxyl group may be used alone or as a mixture thereof. Specifically, the first chelating agent may be a compound having a polycarboxlic acid or carboxylate group which contains a functional group represented by Formula 1a, 1b or 1c.

[Formula 1a]

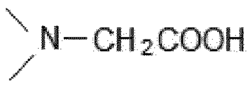

[Formula 1b]

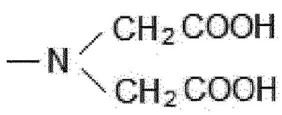

[Formula 1c]

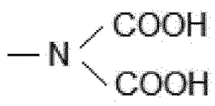

Examples of compounds containing the functional groups represented by Formulae 1a to 1c may be selected from the group consisting of ethylenediamine-N,N,N',N'-tetraacetic acid (EDTA), ethylene glycol bis(2-aminoethylether)-N,N,N',N'-tetraacetic acid (EGTA), trans-1,2-diaminocyclohexane-N,N,N',N'-tetraacetic acid (CyDTA), diethylene triamine pentaacetic acid (DTPA), triethylenetetramine-N,N,N',N",N"',N"'-hexaacetic acid (TETHA), N-(2-hydroxyethyl)ethylenediamine triacetic acid (HEDTA), and metal salts thereof, which may also be used as a mixture thereof.

A metal ion forming bonding with the first chelating agent may include at least one of sodium (Na), aluminum (Al), iron (Fe), copper (Cu), zinc (Zn), tin (Sn), titanium (Ti), nickel (Ni), antimony (Sb), magnesium (Mg), vanadium (V), chromium (Cr), and zirconium (Zr) ions. Any metal ion which exhibits the same effects may be used as the first chelating agent, without being limited thereto. Specifically, ethylenediamine tetraacetic acid-disodium salt (EDTA-2Na) may be used.

The first chelating agent may be present in an amount of 0.1 wt% to 1 wt%, specifically 0.5 wt% to 0.9 wt% in the thermoplastic resin composition for automobiles. Within this range, the first chelating agent can have a good effect of improving long-term thermal stability of the thermoplastic resin composition, and the thermoplastic resin composition can reduce gas generation during a manufacturing process to improve processability, has improved mechanical strength, and does not suffer from discoloration.

Second chelating agent

The second chelating agent may include a $C_1$ to $C_{10}$ (not including carbon of any carboxyl group) aliphatic polyhydric carboxylic acid having two to four carboxyl groups. A mixture of at least two different kinds of aliphatic polyhydric carboxylic acids may be used, and carboxylic acid derivatives, such as acid anhydrides, acid chlorides and esters of aliphatic polyhydric carboxylic acids, may be used.

Specifically, the second chelating agent may include at least one selected from the group consisting of fumaric acid, succinic acid, 3,3-diethylsuccinic acid, malonic acid, dimethylmalonic acid, tartaric acid, maleic acid, citric acid, malic acid, adipic acid, 2-methyladipic acid, trimethyladipic acid, itaconic acid, glutaric acid, 2,2-dimethylglutaric acid, pimelic acid, azelaic acid, dimer acid, sebacic acid, suberic acid, decanedicarboxylic acid, dodecane dicarboxylic acid, citraconic acid, tetrahydrophthalic acid, 1,2,3,4-butanetetracarboxylic acid, oxalic acid, and a combination thereof.

Any aliphatic polyhydric carboxylic acid which exhibits the same effect may be used for the second chelating agent, without being limited thereto. Specifically, citric acid may be used.

The second chelating agent may be present in an amount of 0.1 wt% to 5 wt% in the thermoplastic resin composition for automobiles. Within this range, the second chelating agent can stably contribute to improve long-term thermal stability of the thermoplastic resin composition together with the first chelating agent.

The first chelating agent and the second chelating agent oxidize a surface upon aging at high temperature to accelerate formation of char on the surface, thereby preventing infiltration of an oxidized layer into a thermoplastic resin and thus avoiding decomposition of the thermoplastic resin. Accordingly, improvement in long-term thermal stability of the thermoplastic resin composition can be achieved.

The first chelating agent and the second chelating agent react with a sizing material of glass fibers to improve long-term thermal stability of the thermoplastic resin composition.

In the present invention, a mixture of the first chelating agent and the second chelating agent is used to achieve good long-term thermal stability, in which a weight ratio of the first chelating agent to the second chelating agent may range from 1:0.5 to 1:10, specifically from 1:1 to 1:10, or from 1:2 to 1:10. Within this range, the effect of preventing decomposition of the thermoplastic resin of the resin composition upon aging at high temperature can be further improved.

**Filler**

The thermoplastic resin composition for automobiles includes the fillers and can secure mechanical strength at a desired level by adjusting the amount of the fillers.

Specifically, the fillers may include glass fibers.

The glass fibers may be typical glass fibers used in the art, and may has a diameter of 8 $\mu$m to 20 $\mu$m and a length of 1.5 mm to 8 mm. Within this range of glass fiber diameter, the glass fibers can provide good reinforcement effects. Within this range of glass fiber length, the thermoplastic resin composition can be easily put into a processing machine such as an extruder and reinforcement effects by the glass fibers can be significantly improved.

The glass fibers may be used as a mixture with fibers selected from the group consisting of carbon fibers, basalt fibers, fibers made from biomass, and a combination thereof. Biomass refers to plants or microorganisms that can be used as energy sources.

The glass fibers may have a circular cross-section, an oval cross-section, a rectangular cross-section, or a two-connected-circle shaped cross-section, that is, a dumbbell-shaped cross-section.

The cross-section of the glass fibers has an aspect ratio of 1 to 8.. Here, the aspect ratio is defined as a ratio of the shortest diameter to the longest diameter of the cross-section of the glass fibers. For example, a circular shape with an aspect ratio of 1 may be used as the glass fiber. Use of the glass fibers having a cross-section with the aspect ratio within the above range can reduce a unit cost of a product. Use of glass fibers having a circular cross-section can enhance dimensional stability and appearance.

The glass fibers may be subjected to surface treatment with a sizing material in order to prevent reaction with the resin and to improve impregnation degree. Surface treatment of the glass fibers may be performed during manufacture of the glass fibers or through post processing.

The filler may be used along with the second chelating agent to further increase an effect of improving long-term thermal stability.

For example, when the glass fibers are used as the fillers, the glass fibers may be subjected to surface treatment in which surfaces of hair-like filaments are coated with a chemical mixture, which is called sizing. Generally, sizing is used to protect filaments from friction occurring on a contact surface in all processes to which the glass fibers are subjected or to impart a function of facilitating bonding between the glass fibers and the resin.

The first chelating agent and the second chelating agent react with the sizing material of the glass fiber, thereby improving long-term thermal stability.

More specifically, strength of the glass fibers depends on a silicate network structure, and alkali oxide of the

glass fibers is not easily integrated into the silicate network structure, causing deterioration in strength. However, as in the present invention, when the first chelating agent and the second chelating agent are used together, the first chelating agent and the second chelating agent combine with the sizing material of the glass fibers to suppress action of alkali oxide, thereby maintaining strength despite long-term exposure to high temperature.

The fillers may be present in an amount of 10 wt% to 60 wt%, specifically 20 wt% to 50 wt% in the thermoplastic resin composition for automobiles. Within this range, the thermoplastic resin composition can exhibit improved strength and further improved long-term thermal stability.

In one embodiment, the thermoplastic resin composition for automobiles may further include additives depending on purposes.

The additive may include dyes, pigments, heat stabilizers, UV stabilizers, lubricants, antimicrobials, release agents, nucleating agents, antistatic agents, antioxidants, and inorganic additives, without being limited thereto. These additives may be used alone or in combination thereof.

The thermoplastic resin composition for automobiles uses the first chelating agent and the second chelating agent, and a mixture of two kinds of polyamides, thereby exhibiting good long-term thermal stability, fluidity, and processability without deteriorating other physical properties of the polyamide resins, such as wear resistance, chemical resistance, flame retardancy, and mechanical strength.

The thermoplastic resin composition for automobiles according to the present invention may be prepared by any known method. For example, the thermoplastic resin composition may be prepared in pellet form by substantially mixing the components of the present invention and other additives, followed by melt extrusion in an extruder.

A molded part for automobiles according to one embodiment of the present invention may be manufactured from the thermoplastic resin composition for automobiles as set forth above. The molded part for automobiles has good long-term thermal stability and processability.

The molded part may have an initial tensile strength $a_0$ after being left at 23°C and 50% relative humidity (RH) for 48 hours measured in accordance with ASTM D638 and a tensile strength $a_1$ after being left at 220°C for 500 hours also measured in accordance with ASTM D638, wherein the molded part can have a tensile strength retention ratio range of $a_1$ and $a_0$ represented by the following Equation 1:

[Equation 1]

$$85 \leq \frac{a_1}{a_0} \times 100 \leq 100 .$$

The molded part may have an initial tensile strength $a_0$ after being left at 23°C and 50% relative humidity (RH) for 48 hours measured in accordance with ASTM D638 and a tensile strength $a_2$ after being left at 220°C for 1,000 hours also measured in accordance with ASTM D638, wherein the molded part can have a tensile strength retention ratio range of $a_2$ and $a_0$ represented by the following Equation 2:

[Equation 2]

$$70 \leq \frac{a_2}{a_0} \times 100 \leq 100 .$$

The molded part may have a gas generation amount represented by the following Equation 3, as measured by weighing 5 g of the molded part in a Petri dish, covering the dish with a dish cap, placing the dish on a hot plate at 330°C for 2 hours, followed by measuring the amount of volatile substances adsorbed to the dish cap.

[Equation 3]

$$50 \leq \frac{C - C_0}{S} \times 10^6 \leq 900 ,$$

wherein C is a weight of the dish cap after evaluation, $C_0$ is a weight of the dish cap before evaluation, and S is a weight of the molded part used for evaluation. Specifically, the molded part may be applied to a molded part for automobiles required to have long-term thermal stability and fluidity.

The molded part may be at least one of under hood parts. For example, the molded part may be battery fuse

terminal, turbo resonator or intercooler tank, but not limited there to.

## EXAMPLES

Specifically, the molded part may be applied to a water temperature controller, a thermostat housing, or a fuel rail for automobile, without being limited thereto.

Next, some examples for proving excellent effects of the polyester resin composition according to the present invention will be described in detail.

Details of components used for thermoplastic resin compositions of Examples and Comparative Examples are as follows.

(a) Polyamide resin

(a-1) PA6T/66 A6000 (AMODEL® PPA A6000, polyphthalamide, Tg: 88°C, Solvay Specialty Polymers Co., Ltd.)
(a-2) Polyamide 66 Vydyne (Vydyne®PA66, Tg: 60°C, Ascend Performance Materials LLC)
(a-3) Polyamide 6 TP 4208 (Zig Sheng Industrial Co., Ltd.)

(b) Chelating agent

(b-1) EDTA-2Na (Dow Chemical Company)
(b-2) Citric acid anhydride (Samchun Chemical Co., Ltd.)

(c) Filler

Glass fibers having an oval cross-section, a diameter of 10 μm and a chop length of 4 mm (983, Owens Coming Co., Ltd.)

(d) Thermal stabilizer

A CuI/KI mixture TP-H9008 (Brueggemann Chemical Co., Ltd.)

Components as listed in Table 1 were introduced into a mixer, followed by dry mixing. Next, the mixture was placed in a twin-screw extruder having an L/D of 45 and Φ of 44 mm, thereby preparing a thermoplastic resin composition in pellet form through the extruder. The prepared pellets were formed into specimens for evaluation of physical properties using a 10 oz. injection molding machine set to 280°C.

The content of each of the components as listed in Table 1 is given in wt%.

**Table 1**

| | | (a-1) | (a-2) | (a-3) | (b-1) | (b-2) | (c) | (d) |
|---|---|---|---|---|---|---|---|---|
| Example | 1 | 58.5 | 5 | - | 0.5 | 1 | 35 | - |
| | 2 | 53.5 | 10 | - | 0.5 | 1 | 35 | - |
| | 3 | 63.5 | - | 10 | 0.5 | 1 | 35 | - |
| | 4 | 58.9 | 5 | - | 0.1 | 1 | 35 | - |
| | 5 | 58.1 | 5 | - | 0.9 | 1 | 35 | - |

(continued)

| | | (a-1) | (a-2) | (a-3) | (b-1) | (b-2) | (c) | (d) |
|---|---|---|---|---|---|---|---|---|
| Comparative Example | 1 | 64.8 | - | - | - | - | 35 | 0.2 |
| | 2 | 63.5 | - | - | 0.5 | 1 | 35 | - |
| | 3 | 62.5 | - | - | 0.5 | 2 | 35 | - |
| | 4 | 59.8 | 5 | - | - | - | 35 | 0.2 |
| | 5 | 54.8 | 10 | - | - | - | 35 | 0.2 |
| | 6 | 59.5 | 5 | - | 0.5 | - | 35 | - |
| | 7 | 59 | 5 | - | - | 1 | 35 | - |

Each of the thermoplastic resin compositions prepared in Examples 1 to 5 and Comparative Examples 1 to 7 was evaluated as to long-term thermal stability and gas generation amount. Evaluation was performed by the following methods, and evaluation results are shown in Table 2.

<Evaluation of long-term thermal stability>

(1) A portion of each specimen manufactured using each of the thermoplastic resin compositions prepared in Examples 1 to 5 and Comparative Examples 1 to 7 was left at 23°C and 50% RH for 48 hours, followed by measuring initial tensile strength ($a_0$) in accordance with ASTM D638. Here, tensile strength measurement speed was 5 mm/min. Subsequently, a remaining portion of each specimen was left at 220°C for 500 hours, followed by measuring tensile strength ($a_1$). Long-term thermal stability was evaluated based on a tensile strength retention ratio calculated by Equation 4.

[Equation 4]

$$\frac{a_1}{a_0} \times 100(\%)$$

(2) A portion of each specimen manufactured using each of the thermoplastic resin compositions prepared in Examples 1 to 5 and Comparative Examples 1 to 7 was left at 23°C and 50% RH for 48 hours, followed by measuring initial tensile strength ($a_0$) in accordance with ASTM D638. Here, tensile strength measurement speed was 5 mm/min. Subsequently, a remaining portion of each specimen was left at 220°C for 1,000 hours, followed by measuring tensile strength ($a_2$). Long-term thermal stability was evaluated based on a tensile strength retention ratio calculated by Equation 5.

[Equation 5]

$$\frac{a_2}{a_0} \times 100(\%).$$

< Evaluation of gas generation amount>

About 5 g of pellets prepared from each of the thermoplastic resin compositions prepared in Examples 1 to 5 and Comparative Examples 1 to 7 was weighed in a Petri dish and covered with a dish cap. Then, the dish was placed on a hot plate at 330°C for 2 hours, followed by measuring the amount of volatile substances adsorbed to the dish cap. The amount of gas generated was calculated by Equation 6.

[equation 6]

$$\frac{C - C_0}{S} \times 10^6 (ppm),$$

where C is the weight of the dish cap after evaluation, $C_0$ is the weight of the dish cap before evaluation, and S is the weight of the molded part for automobiles used for evaluation.

**Table 2**

| | | Long-term thermal stability (1) | | | Long-term thermal stability (2) | | | Gas generation amount (ppm) |
|---|---|---|---|---|---|---|---|---|
| | | Initial tensile strength (kg/cm$^2$) | Tensile strength after 500 hours (kg/cm$^2$) | Tensile strength retention ratio after 500 hours (%) | Initial tensile strength (kg/cm$^2$) | Tensile strength after 1,000 hours (kg/cm$^2$) | Tensile strength retention ratio after 1,000 hours (%) | |
| Example | 1 | 2094 | 2028 | 97 | 2094 | 1594 | 76 | 180 |
| | 2 | 2148 | 2084 | 97 | 2148 | 1951 | 91 | 350 |
| | 3 | 2012 | 1985 | 99 | 1985 | 1945 | 98 | 720 |
| | 4 | 2018 | 1816 | 90 | 2018 | 1493 | 74 | 190 |
| | 5 | 2011 | 1850 | 92 | 2011 | 1508 | 75 | 510 |
| Comparative Example | 1 | 1917 | 1258 | 66 | 1917 | 900 | 47 | 150 |
| | 2 | 2068 | 1810 | 88 | 2068 | 1251 | 60 | 550 |
| | 3 | 2071 | 1921 | 93 | 2071 | 1314 | 63 | 720 |
| | 4 | 2035 | 1424 | 70 | 2035 | 977 | 48 | 530 |
| | 5 | 2021 | 1455 | 72 | 2021 | 1031 | 51 | 620 |
| | 6 | 2013 | 1107 | 55 | 2013 | 866 | 43 | 230 |
| | 7 | 1955 | 1173 | 60 | 1955 | 821 | 42 | 420 |

From Tables 1 and 2, it can be seen that the thermoplastic resin compositions prepared in Examples 1 to 5 had good long-term thermal stability and generated a small amount of gas to have good processability.

When a copper halide compound is used as a typical heat stabilizer (Comparative Examples 1, 4, and 5), the thermoplastic resin compositions had much lower long-term thermal stability than the thermoplastic resin compositions according to the present invention.

Further, when only a semi-aromatic polyamide is used as a polyamide (Comparative Examples 2 and 3), the tensile strength retention ratio of the resin composition was reduced as compared with that of the composition according to the present invention. That is, when two kinds of polyamides were used in a certain ratio, the thermoplastic resin compositions could maintain high tensile strength despite exposure to high temperature for a long time.

Further, when only one of the first chelating agent or the second chelating agent was used (Comparative Examples 6 and 7), long-term thermal stability and processability of the thermoplastic resin composition could not be simultaneously improved.

Thus, it can be seen that the kinds and contents of polyamides and the kinds and contents of chelating agents are factors considerably affecting long-term thermal stability and processability of the thermoplastic resin compositions according to the present invention.

Although some embodiments have been described herein, it should be understood that these embodiments

are provided for illustration only and are not to be construed in any way as limiting the present invention, and that various modifications, changes, alterations, and equivalent embodiments can be made. The scope of the present invention should be defined by the appended claims and equivalents thereof.

## Claims

1. A thermoplastic resin composition for automobiles comprising:

   a semi-aromatic polyamide resin;
   an aliphatic polyamide resin;
   a first chelating agent containing an amino group and at least one of carboxylic acid and salts thereof;
   a second chelating agent containing a $C_1$ to $C_{10}$ (not including carbon of carboxyl group) aliphatic polyhydric carboxylic acid having two to four carboxyl groups; and
   fillers.

2. The thermoplastic resin composition for automobiles according to claim 1, wherein the thermoplastic resin composition comprises 30 wt% to 70 wt% of the semi-aromatic polyamide resin; 1 wt% to 20 wt% of the aliphatic polyamide resin; 0.1 wt% to 1 wt% of the first chelating agent; 0.1 wt% to 5 wt% of the second chelating agent; and 10 wt% to 60 wt% of the fillers.

3. The thermoplastic resin composition for automobiles according to claim 1 or 2, wherein the semi-aromatic polyamide resin and the aliphatic polymer resin are present in a weight ratio of 1:0.05 to 1:0.5.

4. The thermoplastic resin composition for automobiles according to claims 1 to 3, wherein the first chelating agent and the second chelating agent are present in a weight ratio of 1:0.5 to 1:10.

5. The thermoplastic resin composition for automobiles according to claims 1 to 4, wherein the fillers comprise glass fibers.

6. The thermoplastic resin composition for automobiles according to claims 1 to 5, wherein the semi-aromatic polyamide resin comprises a repeat unit which includes a dicarboxylic acid unit containing 10 mol% to 100 mol% of an aromatic dicarboxylic acid; and an aliphatic diamine or alicyclic diamine unit.

7. The thermoplastic resin composition for automobiles according to claims 1 to 6, wherein the semi-aromatic polyamide resin comprises at least one of polyamide consisting of hexamethylene terephthalamide and hexamethylene adipamide, and polyamide consisting of hexamethylene terephthalamide and 2-methylpentamethylene terephthalamide.

8. The thermoplastic resin composition for automobiles according to claims 1 to 7, wherein the semi-aromatic polyamide resin has a glass transition temperature (Tg) of 80°C to 150°C.

9. The thermoplastic resin composition for automobiles according to claims 1 to 8, wherein the aliphatic polyamide resin comprises at least one of poly(hexano-6-lactam) and poly[imino(1,6-dioxohexamethylene) iminohexamethylene].

10. The thermoplastic resin composition for automobiles according to claims 1 to 9, wherein the aliphatic polyamide resin has a glass transition temperature (Tg) of 30°C to 80°C.

11. The thermoplastic resin composition for automobiles according to claims 1 to 10, wherein the first chelating agent comprises at least one selected from the group consisting of ethylenediamine-N,N,N',N'-tetraacetic acid (EDTA), ethylene glycol bis(2-aminoethylether)-N,N,N',N'-tetraacetic acid (EGTA), trans-1,2-diaminocyclohexane-N,N,N',N'-tetraacetic acid (CyDTA), diethylene triamine pentaacetic acid (DTPA), triethylenetetramine-N,N,N',N",N"',N"'-hexaacetic acid (TETHA), N-(2-hydroxyethyl)ethylenediamine triacetic acid (HEDTA), and metal salts thereof.

12. The thermoplastic resin composition for automobiles according to claims 1 to 11, wherein the first chelating agent comprises at least one metal ion selected from sodium (Na), aluminum (Al), iron (Fe), copper (Cu), zinc (Zn), tin (Sn), titanium (Ti), nickel (Ni), antimony (Sb), magnesium (Mg), vanadium (V), chromium (Cr), and zirconium (Zr) ions.

**13.** The thermoplastic resin composition for automobiles according to claims 1 to 12, wherein the second chelating agent comprises at least one selected from the group consisting of fumaric acid, succinic acid, 3,3-diethylsuccnic acid, malonic acid, dimethylmalonic acid, tartaric acid, maleic acid, citric acid, malic acid, adipic acid, 2-methyladipic acid, trimethyladipic acid, itaconic acid, glutaric acid, 2,2-dimethylglutaric acid, pimelic acid, azelaic acid, dimer acid, sebacic acid, suberic acid, decanedicarboxylic acid, dodecane dicarboxylic acid, citraconic acid, tetrahydrophthalic acid, 1,2,3,4-butanetetracarboxylic acid, oxalic acid, and a combination thereof.

**14.** A molded part for automobiles manufactured from the thermoplastic resin composition for automobiles according to any one of claims 1 to 13.

**15.** The molded part for automobiles according to claim 14, wherein the molded part has an initial tensile strength $a_0$ after being left at 23°C and 50% relative humidity (RH) for 48 hours measured in accordance with ASTM D638 and a tensile strength $a_1$ after being left at 220°C for 500 hours also measured in accordance with ASTM D638, wherein the molded part has a tensile strength retention ratio range of $a_1$ and $a_0$ represented by the following Equation 1:

[Equation 1]

$$85 \leq \frac{a_1}{a_0} \times 100 \leq 100 .$$

**16.** The molded part for automobiles according to claim 14 or 15, wherein the molded part has an initial tensile strength $a_0$ after being left at 23°C and 50% relative humidity (RH) for 48 hours measured in accordance with ASTM D638 and a tensile strength $a_2$ after being left at 220°C for 1,000 hours also measured in accordance with ASTM D638, wherein the molded part has a tensile strength retention ratio range of $a_2$ and $a_0$ represented by the following Equation 2:

[Equation 2]

$$70 \leq \frac{a_2}{a_0} \times 100 \leq 100 .$$

**17.** The molded part for automobiles according to claims 14 to 16, wherein the molded part has a gas generation amount represented by the following Equation 3, as measured by weighing 5 g of the molded part in a Petri dish, covering the dish with a dish cap, placing the dish on a hot plate at 330°C for 2 hours, followed by measuring the amount of volatile substances adsorbed to the dish cap:

[Equation 3]

$$50 \leq \frac{C - C_0}{S} \times 10^6 \leq 900 ,$$

wherein C is a weight of the dish cap after evaluation, $C_0$ is a weight of the dish cap before evaluation, and S is a weight of the molded part used for evaluation.

**18.** The molded part for automobiles according to claims 14 to 17, wherein the molded part is at least one of under hood parts.

**19.** The molded part for automobiles according to claims 14 to 17, wherein the molded part is battery fuse terminal, turbo resonator or intercooler tank.

## Patentansprüche

**1.** Thermoplastische Harzzusammensetzung für Kraftfahrzeuge, umfassend:

ein halbaromatisches Polyamidharz;
ein aliphatisches Polyamidharz;
einen ersten Chelatbildner, der eine Aminogruppe und mindestens entweder Carbonsäure oder Salze davon enthält;
einen zweiten Chelatbildner, der eine aliphatische $C_1$- bis $C_{10}$-Polyhydridcarbonsäure (ausschließlich des Kohlenstoffs der Carboxylgruppe) enthält, die zwei bis vier Carboxylgruppen aufweist; und Füllstoffe.

2. Thermoplastische Harzzusammensetzung für Kraftfahrzeuge nach Anspruch 1, wobei die thermoplastische Harzzusammensetzung 30 Gew.-% bis 70 Gew.-% des halbaromatischen Polyamidharzes; 1 Gew.-% bis 20 Gew.-% des aliphatischen Polyamidharzes; 0,1 Gew.-% bis 1 Gew.-% des ersten Chelatbildners; 0,1 Gew.-% bis 5 Gew.-% des zweiten Chelatbildners; und 10 Gew.-% bis 60 Gew.-% der Füllstoffe umfasst.

3. Thermoplastische Harzzusammensetzung für Kraftfahrzeuge nach Anspruch 1 oder 2, wobei das halbaromatische Polyamidharz und aliphatische Polymerharz in einem Gewichtsverhältnis von 1:0,05 bis 1:0,5 vorhanden sind.

4. Thermoplastische Harzzusammensetzung für Kraftfahrzeuge nach einem der Ansprüche 1 bis 3, wobei der erste Chelatbildner und der zweite Chelatbildner in einem Gewichtsverhältnis von 1:0,5 bis 1:10 vorhanden sind.

5. Thermoplastische Harzzusammensetzung für Kraftfahrzeuge nach einem der Ansprüche 1 bis 4, wobei die Füllstoffe Glasfasern umfassen.

6. Thermoplastische Harzzusammensetzung für Kraftfahrzeuge nach einem der Ansprüche 1 bis 5, wobei das halbaromatische Polyamidharz eine wiederholte Einheit umfasst, die eine Dicarbonsäureeinheit mit 10 Mol-% bis 100 Mol-% einer aromatischen Dicarbonsäure aufweist; und ein aliphatisches Diamin oder eine alicyclische Diamineinheit.

7. Thermoplastische Harzzusammensetzung für Kraftfahrzeuge nach einem der Ansprüche 1 bis 6, wobei das halbaromatische Polyamidharz mindestens ein Polyamid, das aus Hexamethylenterepthalamid und Hexamethylenadipamid besteht, und ein Polyamid, das aus Hexamethylenterephthalamid und 2-Methylpentamtehylenterephthalamid besteht, umfasst.

8. Thermoplastische Harzzusammensetzung für Kraftfahrzeuge nach einem der Ansprüche 1 bis 7, wobei das halbaromatische Polyamidharz eine Glasübergangstemperatur (Tg) von 80°C bis 150°C aufweist.

9. Thermoplastische Harzzusammensetzung für Kraftfahrzeuge nach einem der Ansprüche 1 bis 8, wobei das aliphatische Polyamidharz mindestens eines von Poly(hexano-6-lactam) und Poly[imino(1,6-Dioxohexamethylen)iminohexamethylen] umfasst.

10. Thermoplastische Harzzusammensetzung für Kraftfahrzeuge nach einem der Ansprüche 1 bis 9, wobei das aliphatische Polyamidharz eine Glasübergangstemperatur (Tg) von 30°C bis 80°C aufweist.

11. Thermoplastische Harzzusammensetzung für Kraftfahrzeuge nach einem der Ansprüche 1 bis 10, wobei der erste Chelatbildner mindestens eines umfasst, das ausgewählt ist aus der Gruppe, bestehend aus Ethylenediamin-N,N,N',N'-Tetraessigsäure (EDTA), Ethylenglykol-bis(2-aminoethylether)-N,N,N',N'-Tetraessigsäure (EGTA), Trans-1,2-Diaminocyclohexan-N, N,N',N'-Tetraessigsäure (CyDTA), Diethylenglykoltriamin-Pentaessigsäure (DTPA), Triethylentetramin-N, N, N', N'', N''', N'''-Hexaessigsäure (TETHA), N-(2-Hydroxyethyl)ethylendiamin-Triessigsäure (HEDTA) und Metallsalze davon.

12. Thermoplastische Harzzusammensetzung für Kraftfahrzeuge nach einem der Ansprüche 1 bis 11, wobei der erste Chelatbildner mindestens ein Metallion umfasst, das ausgewählt ist aus Ionen von Natrium (Na), Aluminium (Al), Eisen (Fe), Kupfer (Cu), Zink (Zn), Zinn (Sn), Titan (Ti), Nickel (Ni), Antimon (Sb), Magnesium (Mg), Vanadium (V), Chrom (Cr) und Zirconium (Zr).

13. Thermoplastische Harzzusammensetzung für Kraftfahrzeuge nach einem der Ansprüche 1 bis 12, wobei der zweite Chelatbildner mindestens eines umfasst, das ausgewählt ist aus der Gruppe bestehend aus Fumarsäure, Bernsteinsäure, 3,3-Diethylbernsteinsäure, Malonsäure, Dimethylmalonsäure, Weinsäure, Maleinsäure, Citronensäure, Apfelsäure, Adipinsäure, 2-Methyladipinsäure, Trimethyladipinsäure, Itaconsäure, Glutarsäure, 2,2-Dimethylglutaginsäure, Pimelinsäure, Azelainsäure, Dimersäure, Sebacinsäure, Korksäure, Decandicarbonsäure, Dodecandicarbonsäure, Citraconsäure, Tetrahydrophthalsäure, 1,2,3,4-Butantetracarbonsäure, Oxalsäure und eine Kombination aus davon.

**14.** Formteil für Kraftfahrzeuge, das aus der thermoplastischen Harzzusammensetzung für Kraftfahrzeuge nach einem der Ansprüche 1 bis 13 hergestellt ist.

**15.** Formteil für Kraftfahrzeuge nach Anspruch 14, wobei das Formteil eine anfängliche Zugfestigkeit $a_0$ nach Lassen bei 23°C und 50% relativer Luftfeuchtigkeit (RH) für 48 Stunden, nach ASTM D638 gemessen, und eine Zugfestigkeit $a_1$ nach Lassen bei 220°C für 500 Stunden, auch nach ASTM D638 gemessen, aufweist, wobei das Formteil ein Zugfestigkeitsretentionsverhältnis von $a_1$ zu $a_0$ aufweist, das von der folgenden Gleichung 1 repräsentiert wird:

[Gleichung 1]

$$85 \leq \frac{a_1}{a_0} \times 100 \leq 100 .$$

**16.** Formteil für Kraftfahrzeuge nach Anspruch 14 oder 15, wobei das Formteil eine anfängliche Zugfestigkeit $a_0$ nach Lassen bei 23°C und 50% relativer Luftfeuchtigkeit (RH) für 48 Stunden, nach ASTM D638 gemessen, und eine Zugfestigkeit $a_2$ nach Lassen bei 220°C für 1.000 Stunden, auch nach ASTM D638 gemessen, aufweist, wobei das Formteil ein Zugfestigkeitstetentionsverhältnis von $a_2$ zu $a_0$ aufweist, das von der folgenden Gleichung 2 repräsentiert wird:

[Gleichung 2]

$$70 \leq \frac{a_2}{a_0} \times 100 \leq 100 .$$

**17.** Formteil für Kraftfahrzeuge nach einem der Ansprüche 14 bis 16, wobei das Formteil eine Gaserzeugungsmenge aufweist, die durch die folgende Gleichung 3 repräsentiert wird, wie durch Wiegen von 5g des Formteils in einer Petrischale, Bedecken der Schale mit einem Schalendeckel, Anordnen der Schale auf einer heißen Platte bei 330°C für 2 Stunden gefolgt vom Messen der Menge von flüchtigen Substanzen, die an den Schalendeckel absorbiert werden, gemessen wird:

[Gleichung 3]

$$50 \leq \frac{C - C_0}{S} \times 10^6 \leq 900 ,$$

wobei C ein Gewicht des Schalendeckels nach Bewertung ist, $C_0$ ein Gewicht des Schalendeckels vor der Bewertung ist und S ein Gewicht des Formteils ist, das für die Bewertung verwendet wird.

**18.** Formteil für Kraftfahrzeuge nach einem der Ansprüche 14 bis 17, wobei das Formteil mindestens ein Teil unterhalb der Motorhaube ist.

**19.** Formteil für Kraftfahrzeuge nach einem der Ansprüche 14 bis 17, wobei das Formteil mindestens eines von Batteriesicherungsklemme, Turboresonator oder Zwischenkühlertank ist.

## Revendications

1. Composition de résine thermoplastique pour des automobiles comprenant :

   une résine de polyamide semi-aromatique ;
   une résine de polyamide aliphatique ;
   un premier agent chélatant contenant un groupe amino et au moins l'un d'un acide carboxylique et de sels de celui-ci ;
   un second agent chélatant contenant un acide polycarboxylique aliphatique en $C_1$ à $C_{10}$ (sans compter l'atome de carbone du groupe carboxyle) ayant deux à quatre groupes carboxyle ; et
   des matières de charge.

2. Composition de résine thermoplastique pour des automobiles selon la revendication 1, la composition de résine thermoplastique comprenant 30 % en poids à 70 % en poids de la résine de polyamide semi-aromatique ; 1 % en poids à 20 % en poids de la résine de polyamide aliphatique ; 0,1 % en poids à 1 % en poids du premier agent chélatant ; 0,1 % en poids à 5 % en poids du second agent chélatant ; et 10 % en poids à 60 % en poids des matières de charge.

3. Composition de résine thermoplastique pour des automobiles selon la revendication 1 ou 2, la résine de polyamide semi-aromatique et la résine de polymère aliphatique étant présentes en un rapport pondéral de 1:0,05 à 1:0,5.

4. Composition de résine thermoplastique pour des automobiles selon les revendications 1 à 3, le premier agent chélatant et le second agent chélatant étant présents en un rapport pondéral de 1:0,5 à 1:10.

5. Composition de résine thermoplastique pour des automobiles selon les revendications 1 à 4, les matières de charge comprenant des fibres de verre.

6. Composition de résine thermoplastique pour des automobiles selon les revendications 1 à 5, la résine de polyamide semi-aromatique comprenant un motif répété qui comprend un motif acide dicarboxylique contenant 10 % en mole à 100 % en mole d'un acide dicarboxylique aromatique ; et un motif diamine aliphatique ou diamine alicyclique.

7. Composition de résine thermoplastique pour des automobiles selon les revendications 1 à 6, la résine de polyamide semi-aromatique comprenant au moins l'un d'un polyamide constitué d'hexaméthylènetéréphtalamide et d'hexaméthylèneadipamide et d'un polyamide constitué d'hexaméthylènetéréphtalamide et de 2-méthylpentaméthylènetéréphtalamide.

8. Composition de résine thermoplastique pour des automobiles selon les revendications 1 à 7, la résine de polyamide semi-aromatique ayant une température de transition vitreuse (Tg) de 80 °C à 150 °C.

9. Composition de résine thermoplastique pour des automobiles selon les revendications 1 à 8, la résine de polyamide aliphatique comprenant au moins l'un du poly(hexano-6-lactame) et du poly[imino(1,6-dioxohexaméthylène)iminohexaméthylène].

10. Composition de résine thermoplastique pour des automobiles selon les revendications 1 à 9, la résine de polyamide aliphatique ayant une température de transition vitreuse (Tg) de 30 °C à 80 °C.

11. Composition de résine thermoplastique pour des automobiles selon les revendications 1 à 10, le premier agent chélatant en comprenant au moins un choisi dans le groupe constitué par l'acide éthylènediamine-*N,N,N',N'*-tétraacétique (EDTA), l'acide éthylèneglycol-bis(2-aminoéthyléther)-*N,N,N',N'*-tétraacétique (EGTA), l'acide *trans*-1,2-diaminocyclohexane-*N,N,N',N'*-tétraacétique (CyDTA) l'acide diéthylènetriaminepentaacétique (DTPA), l'acide triéthylènetétraamine-*N,N,N',N'',N''',N'''*-hexaacétique (TETHA), l'acide *N*-(2-hydroxyéthyl)éthylènediaminetriacétique (HEDTA) et les sels métalliques de ceux-ci.

12. Composition de résine thermoplastique pour des automobiles selon les revendications 1 à 11, le premier agent chélatant comprenant au moins un ion métallique choisi parmi les ions sodium (Na), aluminium (Al), fer (Fe), cuivre (Cu), zinc (Zn), étain (Sn), titane (Ti), nickel (Ni), antimoine (Sb), magnésium (Mg), vanadium (V), chrome (Cr) et zirconium (Zr).

**13.** Composition de résine thermoplastique pour des automobiles selon les revendications 1 à 12, le second agent chélatant en comprenant au moins un choisi dans le groupe constitué par l'acide fumarique, l'acide succinique, l'acide 3,3-diéthylsuccinique, l'acide malonique, l'acide diméthylmalonique, l'acide tartrique, l'acide maléique, l'acide citrique, l'acide malique, l'acide adipique, l'acide 2-méthyladipique, l'acide triméthyladipique, l'acide itaconique, l'acide glutarique, l'acide 2,2-diméthylglutarique, l'acide pimélique, l'acide azélaïque, un acide dimérisé, l'acide sébacique, l'acide subérique, l'acide décanedicarboxylique, l'acide dodécanedicarboxylique, l'acide citraconique, l'acide tétrahydrophtalique, l'acide butane-1,2,3,4-tétracarboxylique, l'acide oxalique et une association de ceux-ci.

**14.** Pièce moulée pour des automobiles fabriquée à partir de la composition de résine thermoplastique pour des automobiles selon l'une quelconque des revendications 1 à 13.

**15.** Pièce moulée pour des automobiles selon la revendication 14, la pièce moulée ayant une résistance à la traction initiale $a_0$ après avoir été laissée à 23 °C et une humidité relative (HR) de 50 % pendant 48 heures mesurée conformément à la norme ASTM D638 et une résistance à la traction $a_1$ après avoir été laissée à 220 °C pendant 500 heures également mesurée conformément à la norme ASTM D638, la pièce moulée ayant une plage de taux de rétention de la résistance à la traction de $a_1$ et $a_0$ représentée par l'équation 1 suivante :

[Équation 1]

$$85 \leq \frac{a_1}{a_0} \times 100 \leq 100.$$

**16.** Pièce moulée pour des automobiles selon la revendication 14 ou 15, la pièce moulée ayant une résistance à la traction initiale $a_0$ après avoir été laissée à 23 °C et une humidité relative (HR) de 50 % pendant 48 heures mesurée conformément à la norme ASTM D638 et une résistance à la traction $a_2$ après avoir été laissée à 220 °C pendant 1 000 heures également mesurée conformément à la norme ASTM D638, la pièce moulée ayant une plage de taux de rétention de la résistance à la traction de $a_2$ et $a_0$ représentée par l'équation 2 suivante :

[Équation 2]

$$70 \leq \frac{a_2}{a_0} \times 100 \leq 100.$$

**17.** Pièce moulée pour des automobiles selon les revendications 14 à 16, la pièce moulée ayant une quantité de dégagement gazeux représentée par l'équation 3 suivante, telle que mesurée par pesée de 5 g de la pièce moulée dans une boîte de Petri, recouvrement de la boîte avec un couvercle de boîte, disposition de la boîte sur une plaque chauffante à 330 °C pendant 2 heures, suivie de la mesure de la quantité de substances volatiles adsorbées sur le couvercle de boîte :

[Équation 3]

$$50 \leq \frac{C - C_0}{S} \times 10^6 \leq 900 ,$$

C étant un poids du couvercle de boîte après évaluation, $C_0$ étant un poids du couvercle de boîte avant évaluation et S étant un poids de la pièce moulée utilisée pour l'évaluation.

**18.** Pièce moulée pour des automobiles selon les revendications 14 à 17, la pièce moulée en étant au moins une parmi les pièces sous le capot.

**19.** Pièce moulée pour des automobiles selon les revendications 14 à 17, la pièce moulée étant une borne de fusible de batterie, un résonateur de turbocompresseur ou un réservoir d'échangeur thermique intermédiaire.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- KR 10201400184354
- KR 1020150156103